# EUROPEAN PATENT APPLICATION

(11) **EP 3 040 860 A1**
(43) Date of publication of application: **06.07.2016**
(21) Application number: 14200452.2
(22) Date of filing: 29.12.2014
(51) Int. Cl.: G06F 9/50, G06F 21/62

(54) **Resource management in cloud systems**

(71) Applicant: NTT DoCoMo, Inc., Tokyo (JP)
(72) Inventor: Triay Marques, Joan, 80687 Munich (DE); Kiess, Wolfgang, 80687 Munich (DE); An-de Luca, Xueli, 80687 Munich (DE); Perez Caparros, David, 80687 Munich (DE); Khan, Ashiq, 80687 Munich (DE)
(74) Representative: Betten & Resch

(57) **Abstract**

A method and apparatus are presented for allocating at least one virtual resource to a physical and/or software resource from a plurality of physical and/or software resources considering affinity information, which specifies whether or not a requested virtual resource may be collocated on the same physical and/or software resource with one or more virtual resources of tenants different from a first tenant.

## Description

### FIELD OF THE INVENTION

The present technology relates to a method and apparatus for allocating at least one virtual resource to a physical and/or software resource from a plurality of physical and/or software resources. In particular, the present technology relates to tenant affinity for resource management in telco cloud systems.

### BACKGROUND OF THE INVENTION

Network Functions Virtualization (NFV) is an approach to deliver communication services. NFV applies virtualization and automation techniques from IT to move the current network functions (e.g. Firewall, DPI, Serving Gateway, ...) in an operator's network from dedicated hardware to general purpose IT infrastructure. These transformed network functions are known as Virtual Network Functions (VNF). A VNF can be composed by one or several virtual machines (VMs) and virtual networks, which together implement the network function. These VMs and virtual networks are commonly referred as *virtualized resources* in the current invention.

One of the problems that are addressed by the present invention is the waste of resources in the data center due to physical clustering of resources. "Physical clustering" in this context means that a predefined set of computing and storage resources is exclusively assigned to application software from a specific vendor, also referred to as "tenant" within this document. Thus, application software from another vendor cannot use these resources, even if they are free. There are two main reasons for such "physical clustering":
A. *Security:* vendors (tenants) may not want their VMs to be collocated on shared physical or hypervisor software resources with other VMs from other vendors (tenants) for security reasons due to, for example, the possibility to exploit hypervisor or VM bugs to eavesdrop traffic from a VM from a competing vendor.
B. *Performance:* vendors (tenants) want to guarantee that the performance of their VNFs (hence the underlying VMs) is predictable, and thus, a malfunctioning of a VM from a second vendor may impact the VMs from the first vendor. It is also easy for vendors to track and analyze failure reasons once their own VMs experience failures.

"Physical clustering" can lead to two main issues:
1. *Waste of data center resources:* The pre-provisioning of resource clusters can lead to a waste of resources, especially if the pre-provisioning is done in an inappropriate way such that it later does not match with the actual requirements of the tenants. Specifically, the actual use of resources in such a cluster of resources can vary dynamically due to diverse factors such as traffic load, failures, etc.
2. *Stronger dependency on vendor*/*tenant requirements:* Physical clustering of resources in the data center still couples the procurement of the VNF software to the infrastructure hardware. Such a behavior strongly contradicts one of the initial motivations to introduce virtualization which aims to abstract the physical/hardware resources from the application software running on them.

Throughout this disclosure, the term "software" refers to one of the following: First, software that may be shared by different tenants and which is part of the system infrastructure, e.g. software in the form of hypervisor software; second, software that is provided by a tenant to perform application or service functionality, specifically network functions. If necessary and if not otherwise apparent from the context, explicit reference is made to "hypervisor software" vs. "application software" or "VNF software" to differentiate the two distinct uses of the term.

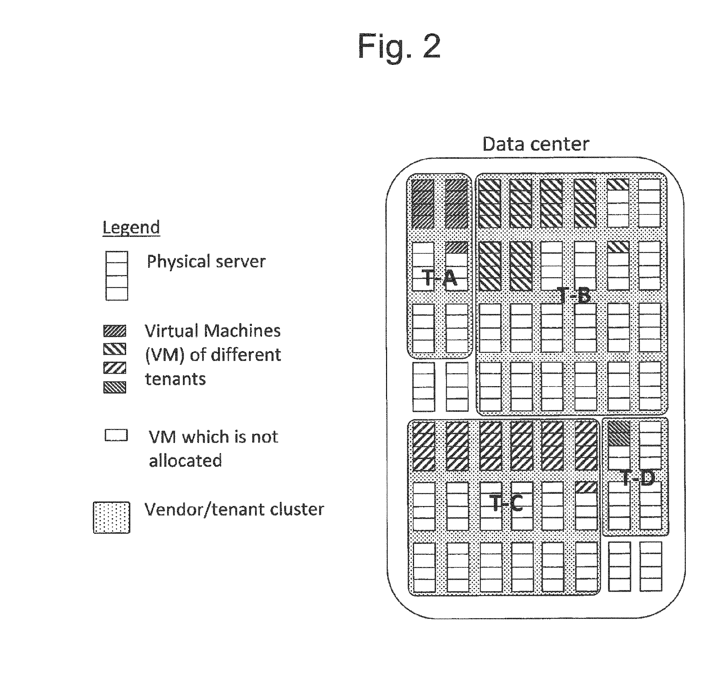

Figure 2 illustrates an example of the physical clustering problem outlined above. Four different clusters are created and assigned to their respective vendors (tenants), namely T-A, T-B, T-C and T-D. The figure also shows how VMs are allocated to certain physical hosts (servers), and how, depending on traffic loads, etc., the physical clustering can lead to wasting resources within each cluster. In essence, the pool of resources in the data center that could have been shared is now fragmented into different clusters impeding the allocation of resources to vendors/tenants other than the owner/user of the cluster.

There are several existing technologies in the domain of data center resources clustering that attempt to address the above problems. One approach is VMware's VSphere 5.5, which is described in the *"vSphere ESXi Vcenter server resource management guide",* available online at http://pubs.vmware.com/vsphere-55/topic/com.vmware.ICbase/PDF/vsphere-esxi-vcenter-server-551-resource-management-guide.pdf. VSphere allows several types of affinity to be defined:
- *CPU-affinity:* CPU-affinity is used to restrict the assignment of VMs to a subset of available processors in multi-processor systems, i.e., it specifies VM-to-processor placement constraints.
- *VM-affinity:* VM-to-VM affinity rules are used to specify affinity (or anti-affinity) between individual VMs, i.e., it specifies whether selected individual VMs should run on the same host or be kept on separate physical hosts (servers).
- *VM-Host affinity:* VM-Host affinity rules specify whether or not the members of a selected VM Distributed Resource Scheduler (DRS) group can run on the members of a specified host DRS group. A VM-Host affinity rule includes the following components: a) one VM DRS group, b) one host DRS group, and c) a designation of whether the rule is a requirement (must) or a preference (should), and whether it expresses affinity (run on) or anti-affinity (not run on).

The last type of affinity (i.e., VM-Host affinity) is the one used to partition resources in the data center and create resource clusters, as the ones shown in Figure 2. These clusters of specific physical hosts (a host DRS group) can then be assigned to tenants (VM DRS group). However, such creation is made offline (pre-planned) and ahead to receive VM allocation requests, i.e., the allocation has already been designated beforehand. Therefore, it does not solve the issue of resources waste. The data center schema in Figure 2 and other figures specifies four virtual machines (VMs) per physical server. This configuration has been chosen for illustration and may vary in actual embodiments, i.e. there may be one or more virtual machines per physical server. In addition to the drawback of pre-planning and allocation of resource clusters outlined above, the specification and maintenance of affinity rules can be very complex and labor-intensive, especially in data center configurations with a numerous tenants that have diverse workloads with different requirements.
A similar approach based on declaring affinity groups and allocating data items and computing resources based on such affinity groups is described by Peirault et al. in US patent US 8577892 B2. The basic idea of this approach is that computing resources can be associated with affinity groups, and such affinity groups may be associated with a geographic region or a number of data centers. Data items and computing resources are associated with affinity groups, and can then be allocated based on such associated affinity group. This solution is very similar to what VMware supports via its DRS clusters.

Another approach is presented by Ferris et al. in US patent US 8402139 B2 wherein a matching system, which could be a cloud management system, collects information about available cloud appliances, which could be physical hosts or servers in the data center, and matches these appliances with user requested services. Such requested services are applications deployed on a number of VMs. The matching system can also track and manage resources, so users can have specific rights and assigned resources are made available to the users. However, US 8402139 B2 does not solve the problem of allocating resources based on expressed and required affinities in comparison with other tenant requests.

Another approach is described by G. Shanamuganathan et al. in "Defragmenting the Cloud Using Demand-based Resource Allocation" at the ACM International Conference on Measurement and Modeling of Computer Systems (SIGMETRICS 2013). The authors propose two algorithms that dynamically allocate the bulk capacity of resources purchased by a customer between its VMs based on their individual demand and other tenant specified controls such as reservation, limits and priority. The proposed Distributed Binary Search (DBS) algorithm matches that of the centralized VMware's DRS resource manager, but working in a distributed environment. And the other proposed algorithm, the Base + Proportional Excess (BPX) is fully asynchronous. The main difference of the solution is that it allows defragmenting the cloud/data center resources, which is related to the technology disclosed herein, but in this case, the allocation is based on VM loads and load priorities of the VMs as expressed in the requests by the customer. Therefore, it does not consider explicit inter-tenant affinity information.

When resources are allocated based on affinity groups, all aforementioned approaches require the allocation of resource groups beforehand and in a pre-planned manner.

### SUMMARY OF THE INVENTION

According to one embodiment, there is provided a method of allocating by a virtualized resource management engine at least one virtual resource to a physical and/or software resource from a plurality of physical and/or software resources comprising the step of obtaining information used to identify a first tenant requesting said at least one virtual resource obtaining affinity information, specifying whether or not said requested virtual resource may be collocated on the same physical and/or software resource with one or more virtual resources of another tenant different from said first tenant.

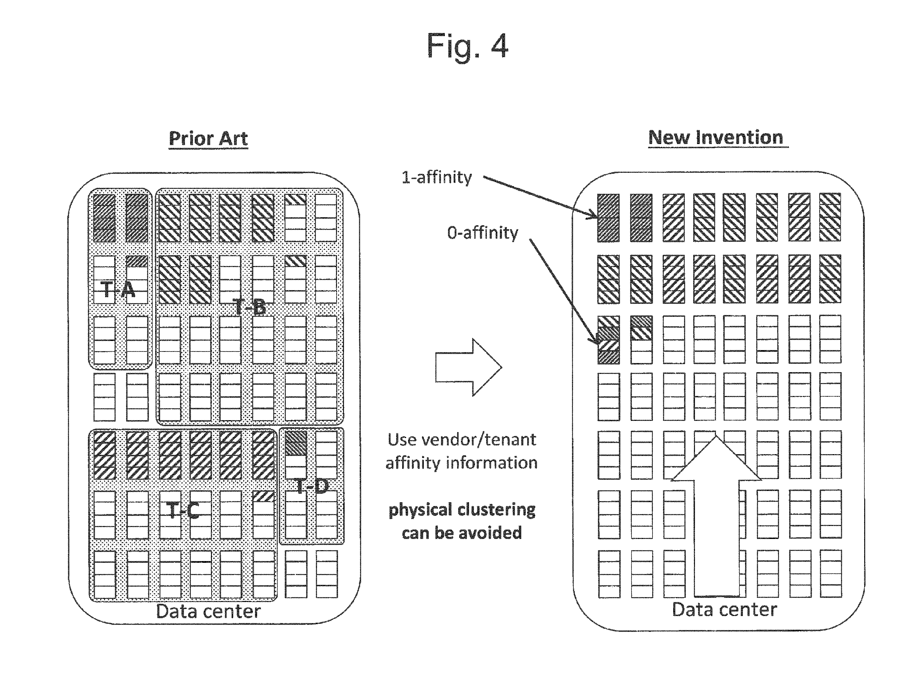

This method has the effect and advantage that resources in the data center may be allocated without having to pre-plan and/or pre-allocate physical and hypervisor software resources to tenants (vendors). Without such pre-allocation, fewer resources are needed in the data center, as the pool of resources is statistically shared among tenants while at the same time affinity information, expressing constraints on the placement of virtual machines of different tenants, are taken into account when determining the allocation. Therefore, savings in infrastructure resources and capital expenditure are possible, as illustrated in Figure 4, which at the same time also reduce the operational cost due to the reduced amount of required resources.

In one embodiment, the method includes an intermediate step to obtain information related to the current allocation of virtual resources to the plurality of physical and software resources.

This has the effect and advantage that resources in the data center may be allocated under consideration of affinity information in a more dynamic way and at run-time.

In one embodiment, the allocating of the at least one virtual resource is based on said affinity information.

This has the effect and advantage that fragmenting resources by a tenant is avoided. This gives more flexibility to perform such fragmentation based on other parameters or resource capabilities, e.g., the type of resources (if some specific hardware acceleration is available on certain hosts), quality of the resources, resiliency levels, etc.

In one embodiment, the virtualized resource management engine is part of an entity responsible for the virtualized infrastructure management of virtual, physical, and software resources in a data center or cloud infrastructure.

This has the effect and advantage that it allows an administrator of the virtualized infrastructure, e.g. the network operator, to decouple the computing, storage, and network resources in the data center from the vendor's implementation of the software to be deployed. In particular, the implementation of the application software does not have to consider how to establish and enforce affinity constraints when being deployed in a specific cloud environment. An entity responsible for the virtualized infrastructure management may, for example, be the VIM in the NFV Architectural Framework.

In one embodiment, a signaling entity of the information used to identify a first tenant and the affinity information is an entity responsible for the management of virtual network functions.

This has the effect and advantage that it allows the tenants (vendors), which control the entity responsible for the management of virtual network functions, to decide on a per VNF deployment/operation case how such VNF and the corresponding virtualized resources should be deployed in terms of being or not collocated with other tenant virtualized resources. An entity responsible for the management of virtual network functions may, for example, be the VNFM in the NFV Architectural Framework.

In one embodiment, the signaling is forwarded through an entity responsible for orchestration of resources and virtual network functions.

This has the effect and advantage that it allows vendors and network operators to have different VNF provisioning strategies under different situations, being in part determined by the entity that is responsible for the orchestration or resources and virtual network functions, like traffic load in the data center, priority of their VNFs, and/or additional network service and resource policy constraints. An entity that is responsible for the orchestration of resources and virtual network functions may, for example, be the NFVO in the NFV Architectural Framework.

In one embodiment, the method includes an intermediate step to discover the affinity information based on information received to identify the first tenant.

This has the effect and advantage in that the affinity information does not have to be specified and transmitted explicitly but is determined based on the identity of the first tenant. This makes the signaling protocol more efficient and it allows an entity other than the tenant (vendor) to determine the specific tenant affinity information.

In one embodiment, the method includes an intermediate step to discover the affinity information based on information received to identify the first tenant, wherein the signaling entity of the information used to identify the first tenant is an entity responsible for the management of virtual network functions, and wherein the discovery of the information related to the affinity based on the information used to identify the first tenant is performed by an entity responsible for the orchestration of resources and virtual network functions, and wherein signaling of information used to identify the first tenant and the information related to the affinity is performed by an entity responsible for the orchestration of resources and virtual network functions.

This embodiment achieves several effects and advantages: tenants (vendors), which control the entity responsible for the management of virtual network functions, are allowed to decide on a per VNF deployment/operation case how such VNF and the corresponding virtualized resources should be deployed in terms of being or not collocated with virtualized resources of other tenants, furthermore vendors and network operators may have different VNF provisioning strategies under different situations, like traffic load in the data center, priority of their VNFs, and/or additional network service and resource policy constraints; finally the signaling protocol may be more efficient and it allows an entity other than the tenant (vendor) to determine the specific tenant affinity information.

In one embodiment, the information related to the affinity is part of a policy and the affinity information is signaled as part of the setup process of the policy.

This has the effect and advantage that the entity responsible for the management of virtual network functions can directly issue a resource allocation request which only needs to specify the resource requirements and the type or class of the VNF for such a resource allocation. Then, the VIM maps such information with that contained in the policies and issues the resource allocation accordingly. Therefore, the signaling can be more efficient.

In one embodiment, the process of allocating said at least one virtual resource to a physical and/or software resource from a plurality of physical and/or software resources is part of management operations wherein management operations preferably include the first instantiation of a virtualized deployment, or the full or partial scaling out, migration or healing of virtualized resources of an existing virtualized deployment.

This has the effect and advantage that the allocation method is effective also in other management operations so that the aforementioned effects and benefits of the allocation method are maintained when the management operations occur.

In one embodiment, the at least one virtual resource is a virtual machine (VM) to run on a hypervisor or a virtual application container to run on an operating system, or a virtual disk drive for storage.

This has the effect and advantage that the method is applicable to computer hardware and software systems and infrastructure commonly available in data centers.

In one embodiment, the allocation of virtual resources is provided for a virtualized deployment, wherein the virtualized deployment is a virtual network function (VNF).

This has the effect and advantage that the method is applicable to allocating resources for virtual network functions in a telco cloud.

In one embodiment, the affinity information can take multiple values to cover different allocation cases, preferably including one or more of anti-affinity to specific tenants, affinity to specific tenants, affinity to virtual resources which are compute, storage or network intensive.

This has the effect and advantage that the affinity information can express affinity or anti-affinity to a certain part or a whole set of vendors, or that affinity information can express affinity or anti-affinity to collocate virtualized resources with certain capabilities.

According to an embodiment, there is provided an apparatus for allocating by a virtualized resource management engine at least one virtual resource to a physical and/or software resource from a plurality of physical and/or software resources comprising: a module for obtaining information used to identify a first tenant requesting said at least one virtual resource, a module for obtaining affinity information, specifying whether or not said requested virtual resource may be collocated on the same physical and/or software resource with one or more virtual resources of another tenant different from said first tenant.

According to another embodiment, the apparatus further comprises a module for obtaining information related to the current allocation of virtual resources to the plurality of physical and software resources.

According to another embodiment, the apparatus further comprises a module for allocating said at least one virtual resource based on said affinity information.

The effects and advantages achieved by the embodiments of the apparatus correspond to the effects and advantages of the embodiments of the method which have been described in detail above.

### DESCRIPTION OF THE DRAWINGS

Figure 1 shows an architectural overview over the functional building blocks of an architectural framework for network function virtualization, in particular the ETSI NFV E2E Architectural Framework.
Figure 2 shows a conceptual schema of a data center and an example of the physical clustering problem.
Figure 3 illustrates an example of the tenant-affinity use and its effect when using it together with VM-affinity rules.
Figure 4 shows a conceptual scheme of a data center according to the prior art based on DRS clusters and a conceptual scheme of a data center with allocations according to one embodiment based on inter-tenant affinity values.
Figure 5 shows an embodiment of the method to allocate virtualized resources based on tenant-affinity information, where the inter tenant-affinity value is "1".
Figure 6 shows an embodiment of the method to allocate virtualized resources based on tenant-affinity information, where the inter tenant-affinity value is "0".
Figure 7 shows the signaling and information flow between functional blocks of the NFV architecture framework when performing the first exemplary embodiment of the method to allocate virtualized resources based on tenant-affinity information.
Figure 8 shows the signaling and information flow between functional blocks of the NFV architecture framework when performing the second exemplary embodiment of the method to allocate virtualized resources based on tenant-affinity information.
Figure 9 shows the signaling and information flow between functional blocks of the NFV architecture framework when performing the third exemplary embodiment of the method to allocate virtualized resources based on tenant-affinity information.
Figure 10 shows the signaling and information flow between functional blocks of the NFV architecture framework when performing the fourth exemplary embodiment of the method to allocate virtualized resources based on tenant-affinity information.

### DETAILED DESCRIPTION

At first, some terms used in the description will be defined in the following list of abbreviations.
- CMS: Cloud Management System
- DRS: Distributed Resource Scheduler
- NFV: Network Functions Virtualization
- NFVI: NFV Infrastructure
- NFVO: NFV Orchestrator
- VIM: Virtual Infrastructure Manager
- VNF: Virtual Network Function
- VNFM: VNF Manager

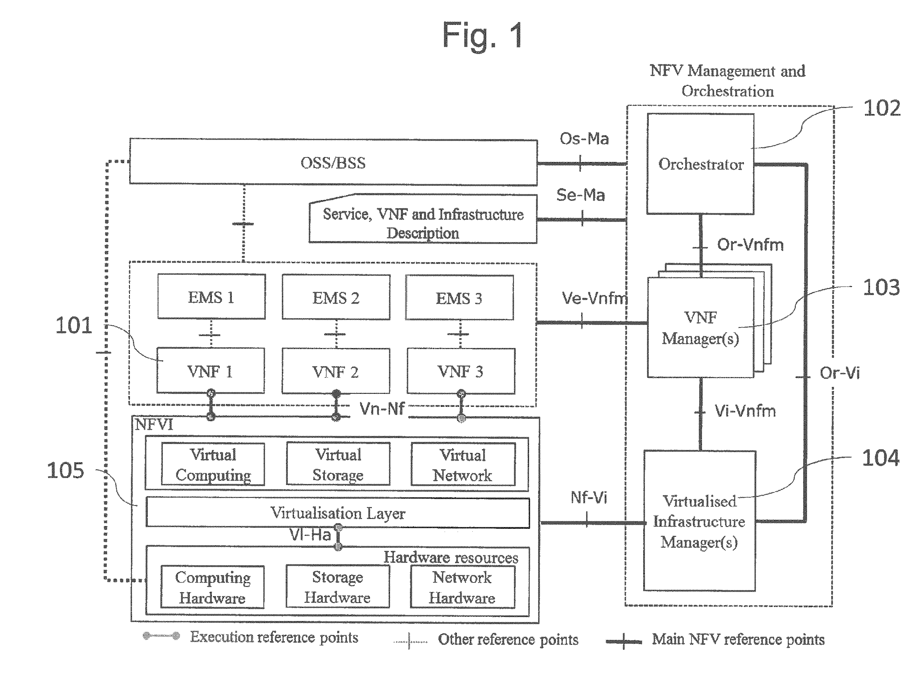

The specifications for NFV are being driven by an Industry Specification Group (ISG) in the European Telecommunications Standards Institute (ETSI). ETSI NFV has defined an NFV Architectural Framework, which focuses on the new functional blocks and reference points brought by the virtualization of an operator's network. An overview of the NFV Architectural Framework is shown in Figure 1.

The NFV Architectural Framework describes the functional blocks and the reference points in between such functional blocks. The split of functionalities and the declared reference points support the management and orchestration of VNFs 101 in a multi-vendor ecosystem. Specifically, the framework provides the required split of functionalities to ensure that the VNF software can be decoupled from the underlying infrastructure. In this scenario, VNF vendors and implementers become actual tenants on using the infrastructure likely managed by another entity, like for instance a mobile network operator. This infrastructure is composed of computing, storage and network resources placed in one or several data centers. The infrastructure is also meant to be shared: by using virtualization techniques, several VMs can be allocated and run on a single physical server.

Throughout the description, the term "vendor" and the term "tenant" will be used interchangeably.

The technology disclosed herein mainly deals with the following functional blocks of the NFV Architectural Framework which are shown in Figure 1:
- The NFV Orchestrator (NFVO) 102, which is in charge of the orchestration and management of NFV Infrastructure and software resources and realizes network services on NFVI. A network service is realized by a collection of one or multiple VNFs.
- The VNF Manager (VNFM) 103, responsible for the VNF lifecycle management (e.g. instantiation, update, query, scaling, termination of VNFs).
- The Virtualized Infrastructure Manager (VIM) 104, which controls and manages the NFVI compute, storage and network resources. In the case of a cloud-based NFVI, the VIM can be implemented as a Cloud Management System (CMS).
- The NFV Infrastructure (NFVI) 105, which comprises the set of compute, storage and network resources over which virtualized resources are allocated.

While the NFVO provides global resource allocation, the VNFMs can interact directly with the VIM (e.g. CMS) to request management of virtualized resources as part of the deployment and management of VNFs. An example for such an interaction is a capacity extension for a deployed VNF: this extension can consist of the VNFM requesting additional VMs from the CMS that are then added to the VNF.

The teachings of the present disclosure tackle the following problem in the context of the NFV Architectural Framework: Given a multi-vendor VNF scenario, with VNFs coming from different vendors, each with their particular resource requirements, how can one ensure that physical clustering of resources can be avoided, thus guaranteeing better statistical gains on sharing resources among different vendors?

In the following, embodiments of the invention will be described.

The technology disclosed herein is based on declaring explicit affinity rules based on tenant/vendor information. By declaring such information, the virtualized resource manager engine (part of a Cloud Management System, or of a VIM) can then allocate virtualized resources (e.g., VMs) as part of a virtualized deployment (e.g., VNF) without having to pre-plan in advance the partitioning of physical and software resources in the data center.

The solution focuses on:
- The parameters about tenant-affinity on interfaces involving functional blocks of the NFV Architectural Framework.
- The method for the resource allocation based on tenant affinity information.

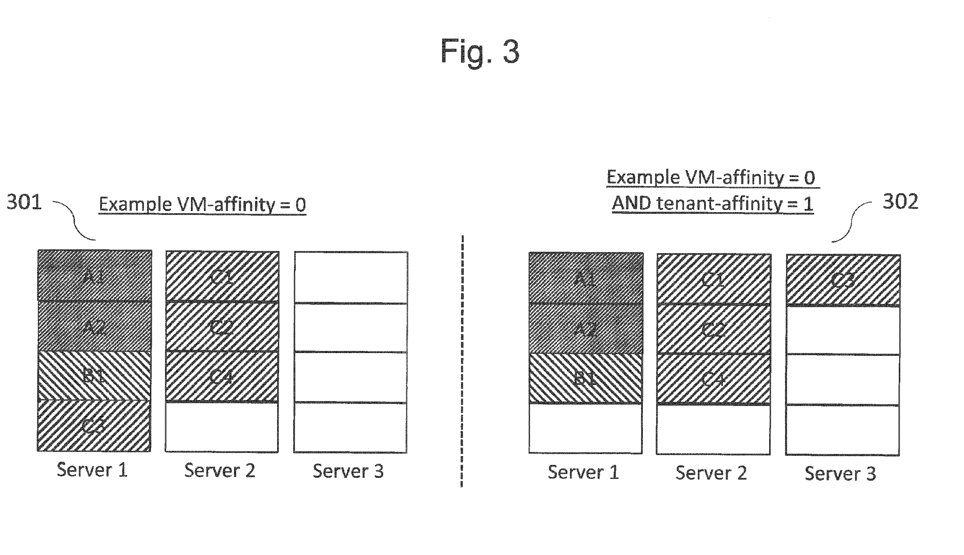

The tenant-affinity parameter, which is referred to in the claims as affinity information, gives information whether the virtualized resources requested by the tenant (vendor) can or cannot be collocated on the same physical and/or software resources with other virtualized resources from other tenants (vendors). The tenant-affinity is a parameter, which is different from other affinity parameters known in the state of the art, e.g., those described in the background section as offered by VMware's DRS. Figure 3 explains and illustrates the tenant affinity parameter according to an embodiment and how the use of the tenant-affinity information is complementary to VM-affinity information (i.e. VM-to-VM affinity as defined above) as used in the state of the art. This VM-affinity information refers only to affinity among selected VMs, not servers. Here VM-affinity=0 means that the new selected VMs cannot be allocated on the same server, while VM-affinity=1 would mean that the selected VMs have to be allocated on the same server. In this example, virtual resources (VMs) C3 and C4 of tenant "C" are selected VMs having VM-affinity=0 and are allocated on Servers 1 and 2, while making use of "VM-affinity = 0" information (case 301). Therefore they are allocated on different servers (Server 1 and Server 2). However, when "tenant-affinity = 1" information is additionally considered, this means that each of the new VMs of a tenant has to be allocated to a server, where only VMs of this tenant are allocated or where no VMs are allocated yet. Therefore, as shown on the right-hand side of Fig. 3, the allocation is performed on Servers 2 and 3 (case 302) which are only used by the same tenant C (referring to Server 2) or which were not used at all and thus are fully available (referring to Server 3).

It will be understood by the skilled person that while Fig. 3 shows an example with only two selected VMs, the same principle can also be applied to more than two selected VMs , which are to be allocated.

Figure 4 compares the prior art (based on DRS clusters) and the technology according to the present disclosure. The left hand side of the figure shows the above described "physical clustering" approach. The right hand side shows an example of using the tenant-affinity parameter. In this case, an affinity value of "1" means that resources cannot be shared among tenants, thus virtualized resources with this value can only share servers with other virtualized resources from the same tenant. Besides, there also exist virtualized resources that have an affinity value of "0", which means that they can share servers with virtualized resources from other tenants.

Several embodiments that use this basic idea are possible, and some of them are detailed in the following.

This technology described herein and specified in the claims has the following advantages:
- It allows the resources in the data center to be allocated in a more dynamic way, and at run-time without having to pre-plan and pre-allocate physical and software resources to tenants (vendors). Fewer resources are needed in the data center, as the pool of resources is statistically shared among tenants. Therefore, savings on resources and capital expenditure are possible as shown in Figure 4, which means that at the same time operational costs can be reduced due to the reduced amount of required resources.
- It avoids fragmenting resources by tenant. This gives more flexibility to perform such fragmentation based on other parameters or resource capabilities, e.g., the type of resources (if some specific hardware acceleration is available on certain hosts), quality of the resources, resiliency levels, etc.
- It allows the administrator of the virtualized infrastructure (in our case the network operator) to decouple the computing, storage, and network resources in the data center from the vendor's implementation of the VNF software.
- It allows the tenants (vendors) to decide on a per VNF deployment/operation case how such VNF and the corresponding virtualized resources should be deployed in terms of being or not collocated with other tenant virtualized resources. This allows vendors to have different VNF provisioning strategy under different situations, like traffic load in the data center, priority of their VNFs, and/or additional network service and resource policy constraints.

In the following, the method to allocate virtualized resources based on tenant-affinity information is described.

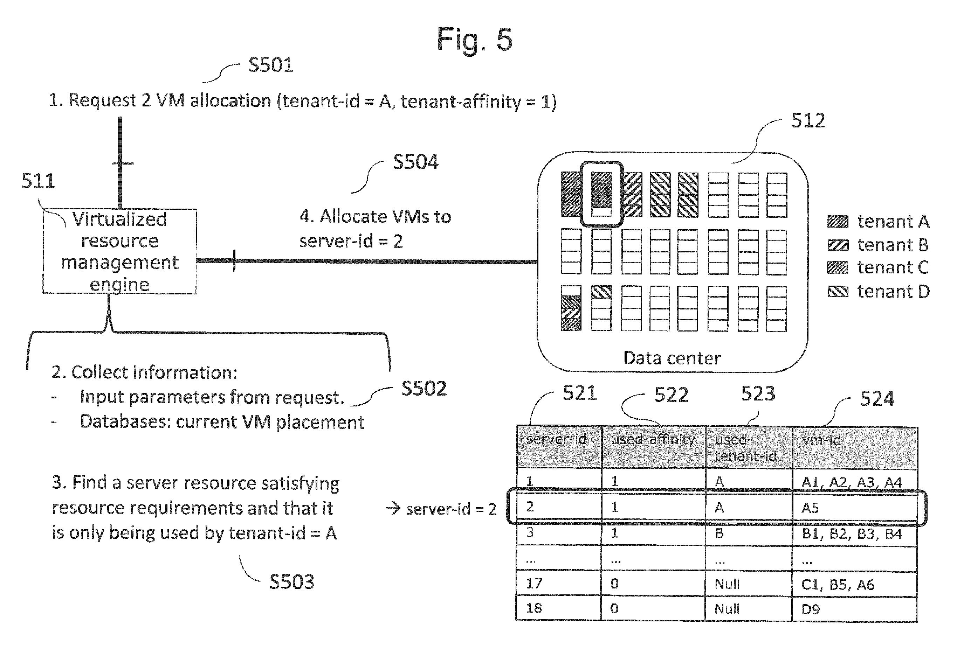

Figure 5 illustrates an example where the inter-tenant-affinity value is "1". This means that VMs cannot be collocated with VMs from other tenants.

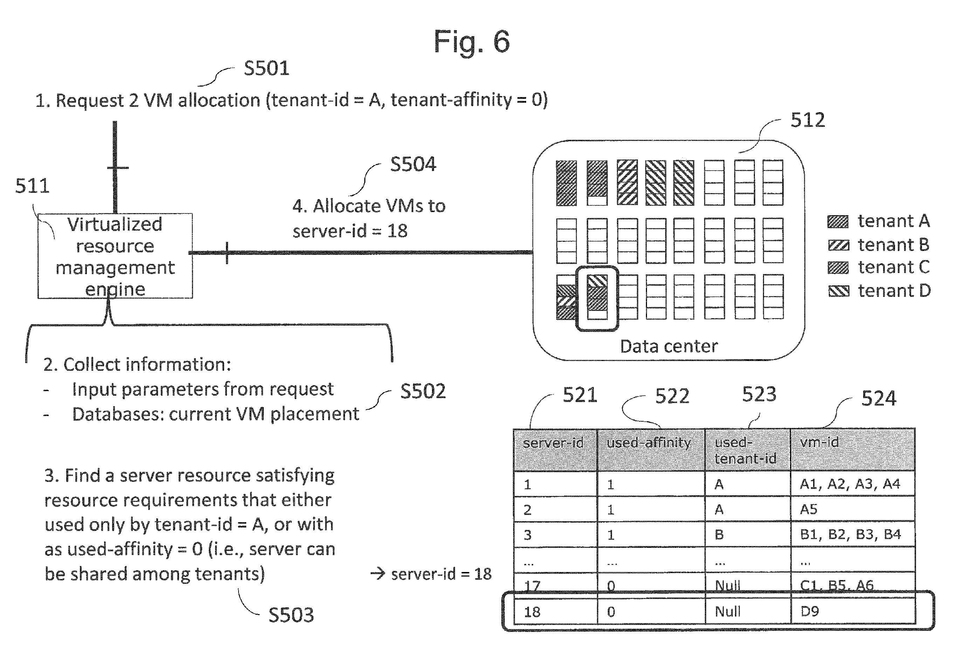

Figure 6 illustrates an example where the inter-tenant-affinity value is "0". In such an example, the request is that VMs can be allocated and collocated with VMs from other tenants.

The method illustrated in Figures 5 and 6 comprises the following four main steps:
1. Step 1 (S501): a request to allocate one or more than one virtualized resources (for simplicity, it is assumed that such resources are virtual machines, VM) is performed. Such a request includes information (parameters) that identify the tenant issuing such a request and the tenant-affinity value per virtualized resource.
2. Step 2 (S502): a virtualized resource management engine 511 collects the input information from the request of step 1. Furthermore, it may collect additional information (either stored or retrieved from another entity) about the current placement of virtualized resources on the pool of shared physical and software resources in the data center. This additional information contains for each identified physical host (identified by a "server-id" parameter 521) at least the following information elements in the table shown with the examples in Figures 5 and 6:
   a. the used-affinity 522 (how the current host/server is used); this corresponds to the tenant-affinity parameter signaled in step 1, but here identifies whether the current physical host can be shared with other tenants (used-affinity "0") or is tenant exclusive (used-affinity "1 ")
   b. the tenant or tenants using such a resource (used-tenant-id 523), and
   c. the identifiers of the virtualized resources (e.g., VMs) (vm-id 524): a list of virtual machines that are instantiated on this physical host
3. Step 3 (S503): the virtualized resource management engine finds a physical host (server) using the resource and tenant-affinity requirements.
4. Step 4 (S504): the virtualized resource management engine issues an allocation request to the hypervisor or virtual machine manager for the selected servers/hosts to allocate the virtualized resources (e.g., VMs) in the data center (cloud infrastructure) 512.

Several embodiments are possible based on who issues and processes the request with the tenant-affinity information, and how such information is processed, for instance,
- based on actual resource requests on interfaces, or
- by mapping resource requests to the actual reservation of resources (note: in this case, the reservation is logical, e.g., number of vCPUs, virtual memory, etc.; that is, more in terms of quotas rather than physical host reservation), or
- by setting up and using policies.

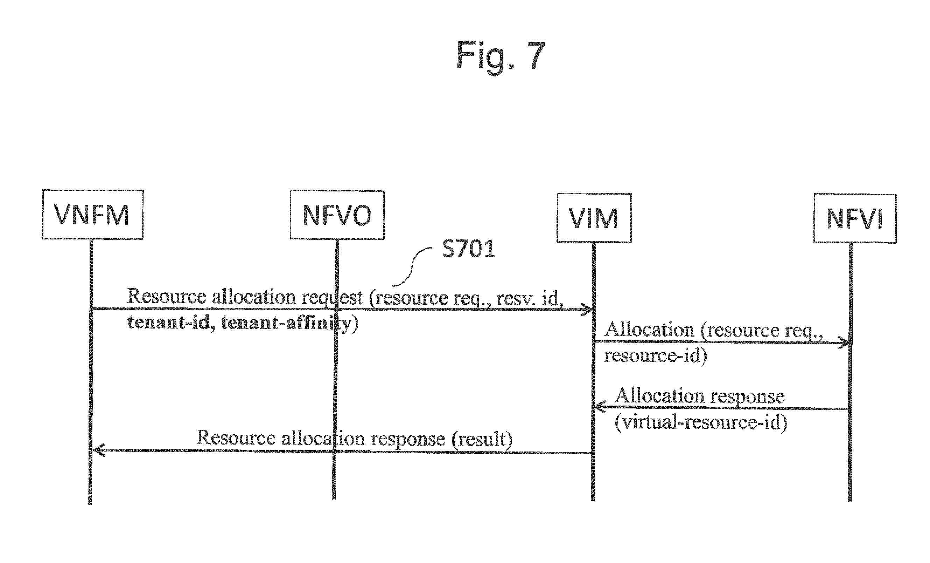

Figures 7 to 10 illustrate exemplary information flows flow between functional blocks of the NFV architecture framework when performing the exemplary embodiments of the method to allocate virtualized resources based on tenant-affinity information, which are described in the following as embodiment 1 to embodiment 4 respectively.

Other possible embodiments, which are referred to as embodiments A to embodiment D, include making use of the invention during resource management operations such as scaling-out a virtualized deployment (e.g., a VNF), or during partial or full migration of virtualized resources, or during partial or full healing of a virtualized deployment. Also, the tenant-affinity parameter could be extended not only to hold one of the binary values of "0" and "1" that have been used as example up to now, but rather to hold a value from a set with more than two values. All these embodiments are summarized and explained in the following sections.

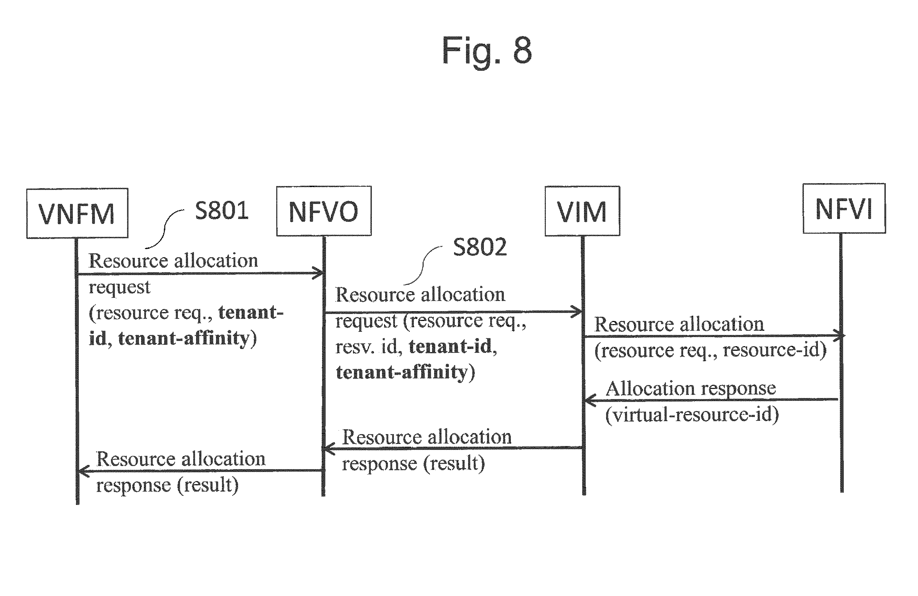

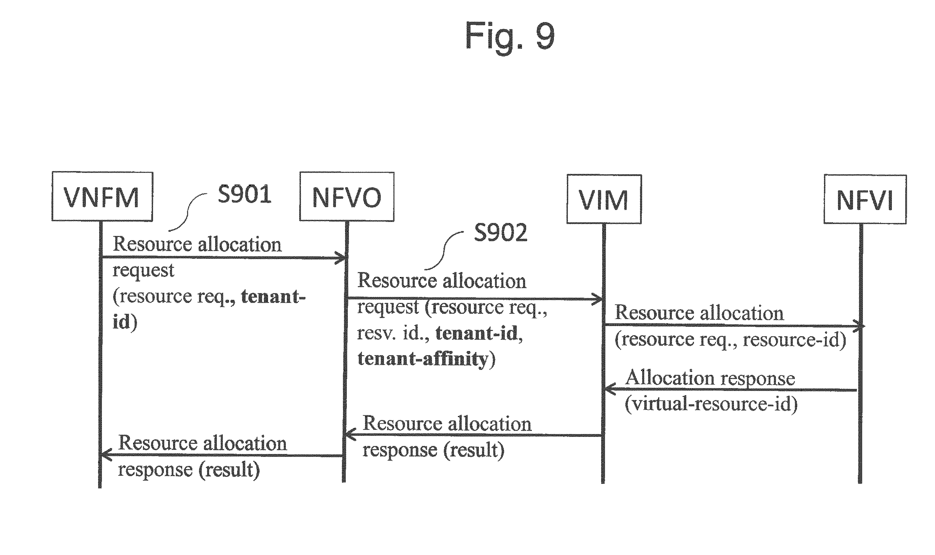

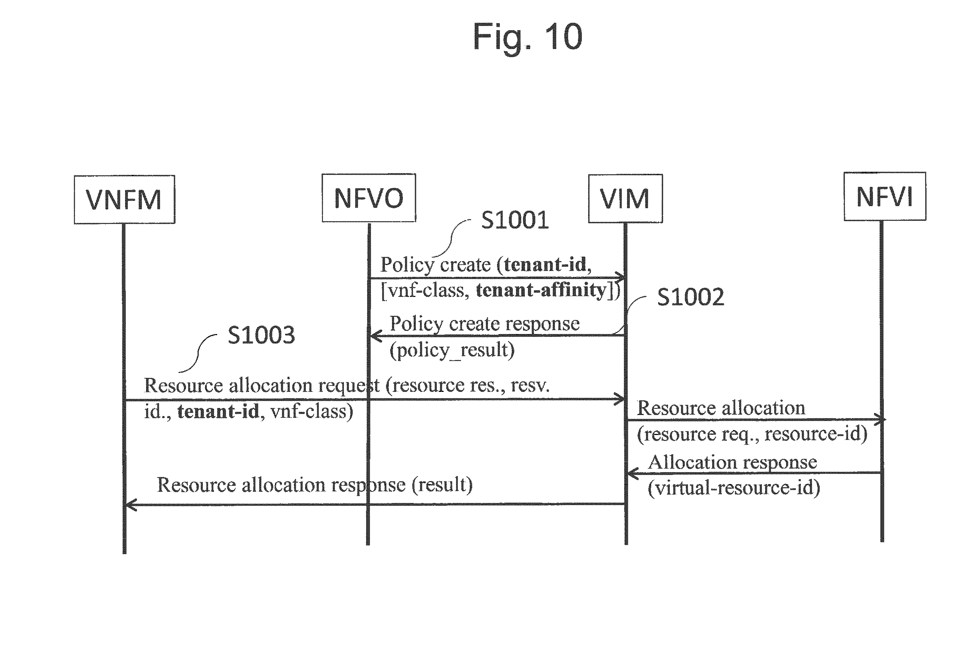

The first set of embodiments 1 to 4 covers the usage of the invention during the resource allocation request procedure:
Embodiment 1 is the main and basic embodiment that has been used as example throughout the above text. Here, the resource allocation request includes in addition to existing parameters (like the specific resource requirements, and possibly reservation information) the identification of the tenant (tenant-id) and the tenant-affinity per virtualized resource requested as presented in this disclosure. In this case, the resource request is made by a VNFM and issued against the VIM as in step S701. The mapping of the tenant-affinity and handling such a requirement during the selection of resources is realized by the VIM. The sequence of steps and the signaling between functional blocks according to embodiment 1 is illustrated in Figure 7.
Embodiment 2 is another embodiment which also aims at the signaling of the tenant affinity and the tenant-id as part of the allocation request, however in this case it is made indirectly through the NFVO (as shown in steps S801 and S802) instead of directly between VNFM and VIM as outlined in embodiment 1. The tenant-affinity information is still signaled by the VNFM. During this process, the NFVO can also map the resource request by the VNFM to a particular reservation. The sequence of steps and the signaling between functional blocks according to embodiment 2 is illustrated in Figure 8.
Embodiment 3 differs from embodiment 2 in that not all information needs to be signaled from the VNFM. Part of the information is rather derived by the NFVO which maps the tenant-id from the resource request from the VNFM. The NFVO here keeps internal information that allows it to derive the tenant affinity information. The NFVO can also map the resource request by the VNFM to a particular reservation. Then the NFVO can proceed with signaling the resource allocation request to the VIM (as in step S902) similarly to embodiment 2. The sequence of steps and the signaling between functional blocks according to embodiment 3 is illustrated in Figure 9.
Embodiment 4: In this case, the signaling of the tenant-affinity information is part of a policy creation process. In this exemplary case, which is illustrated in Figure 10, the NFVO is the issuer of the "create policy", and the VIM is the entity keeping such a policy. Such a policy creation request (step S1001) contains information about the tenant identifier (tenant-id), the tenant-affinity parameter and the class or list of classes of VNFs ([vnf-class]) from the tenant that should follow such affinity placement requirement. The parameter notation uses square brackets "[" "]" to indicate that one or a list of values may be specified. The VIM stores such information which can be used later on to take allocation decisions. Once the policy is created, another third element, e.g., the VNFM can directly issue a resource allocation request (step S1003) which only needs to specify the resource requirements and the type or class of the VNF (vnf-class) for such a resource allocation. Then, the VIM maps such information with that contained in the policies and determines the resource allocation accordingly.

The second set of embodiments relate to different types of resource operations like scaling the capacity of a VNF, or partially or fully migrating virtual machines of a VNF from one physical host to another for which such tenant-affinity can be used, or partially or fully healing a VNF. These embodiments are thus orthogonal to the first set of embodiments: The first set describes different ways to implement the signaling procedure to support tenant-affinity related information being passed through different functional blocks within the NFV Architecture Framework; the second set describes different operations on the virtualized resources that can be supported. Hence the features of embodiments from both sets of embodiments may be combined.

Embodiment A uses the tenant-affinity information as part of an actual virtualized resource allocation request during the new instantiation process of a VNF (virtualized deployment). This is the example that has been used in this description so far.

In embodiment B, it is assumed that the VNF should be scaled-out, e.g. by adding more virtual machines to this VNF. This scale-out procedure thus also requires the allocation of new resources and tenant-affinity information is used to ensure proper instantiation of such resources. In such a case, new virtualized resources may be requested as part of such VNF, or expansion on the existing ones, for example, allocation of more vCPUs or virtual memory to an existing virtualized resource (VM). Note that also a scale-in procedure, in which the capacity of a VNF is reduced, might need tenant-affinity information. Examples are the case that the VIM wants to decide which VM to remove first, or for the case that a VM in the wake of resource consolidation after scale-in should be migrated (as described in the following embodiment C).

Embodiment C assumes a migration scenario, i.e. either the complete VNF or parts of it are to be migrated to different servers within or among datacenters. This is feasible with standard virtual machine migration technologies as commonly used in datacenters. Here, the tenant-affinity information is used to determine to which servers the VMs of a VNF can or cannot be migrated.

Embodiment D covers virtualized resource healing (failure recovery) of the VNF, either for the complete VNF or for parts of it. An example here is the failure of certain VMs of a VNF that then need to be redeployed on new servers. Also in this case, the tenant-affinity information is used to determine suitable candidate servers for such a re-deployment.

Finally, in a third set of embodiments I to III, the possible values of the tenant-affinity parameter are varied. Either they are binary as described up to now, or they take different values from a pre-defined value set.

In embodiment I, the tenant-affinity parameter is a binary value that determines if virtualized resources can be collocated with virtualized resources from other tenants or not: If the parameter is equal to "0", the virtualized resources can be collocated on shared physical and software resources in the data center with other virtualized resources from other tenants; whereas if this parameter is equal to "1", the virtualized resources cannot be collocated with those from other tenants. This is the embodiment that has been described in the above text.

In embodiment II, the tenant-affinity parameter can take values from a value set, wherein the different values denote information to affinity or anti-affinity to a certain part of or a whole set of tenants (vendors). For instance,
- tenant-affinity = A: affinity to any tenant (vendor) of group A.
- tenant-affinity = B: affinity to any tenant (vendor) different than tenant-id = X.
- tenant-affinity = C: affinity to tenant-id = Z, but not to tenant-id = Y.
- etc.

In embodiment III, the tenant-affinity parameter can take values from a value set with more than two values, wherein the different values denote information to affinity or anti-affinity to collocated virtualized resources with certain capabilities. For instance,
- tenant-affinity = M: anti-affinity to compute intensive VMs from other tenants.
- tenant-affinity = N: anti-affinity to intensive input/output data VMs from other tenants.
- etc.

It will be readily apparent to the skilled person that the methods, the elements, units and apparatuses described in connection with embodiments of the invention may be implemented in hardware, in software, or as a combination of both. In particular it will be appreciated that the embodiments of the invention and the elements of modules described in connection therewith may be implemented by a computer program or computer programs running on a computer or being executed by a microprocessor. Any apparatus implementing the invention may in particular take the form of a computing device acting as a network entity.

## Claims

1. A method of allocating by a virtualized resource management engine at least one virtual resource to a physical and/or software resource from a plurality of physical and/or software resources comprising the steps of:
obtaining information used to identify a first tenant requesting said at least one virtual resource,
obtaining affinity information, specifying whether or not said requested virtual resource may be collocated on the same physical and/or software resource with one or more virtual resources of another tenant different from said first tenant.

2. The method according to claim 1 including a step to obtain information related to the current allocation of virtual resources to the plurality of physical and software resources.

3. The method according to any of the preceding claims wherein allocating said at least one virtual resource is based on said affinity information.

4. The method according to any of the preceding claims wherein said virtualized resource management engine is part of an entity responsible for the virtualized infrastructure management of virtual, physical, and software resources in a data center or cloud infrastructure.

5. The method according to any of the preceding claims wherein a signaling entity of the information used to identify a first tenant and the affinity information is an entity responsible for the management of virtual network functions.

6. The method according to any of the preceding claims, wherein signaling is forwarded through an entity responsible for orchestration of resources and virtual network functions.

7. The method according to any of the preceding claims, including an intermediate step to discover the affinity information based on information received to identify the first tenant.

8. The method according to claim 7 wherein:
the signaling entity of the information used to identify the first tenant is an entity responsible for the management of virtual network functions,
discovery of the affinity information based on the information used to identify the first tenant is performed by an entity responsible for the orchestration of resources and virtual network functions, and
signaling of information used to identify the first tenant and the affinity information is performed by an entity responsible for orchestration of resources and virtual network functions.

9. The method according to any of the preceding claims, wherein the affinity information is part of a policy, and the affinity information is signaled as part of the setup process of said policy.

10. The method according to any of the preceding claims,
wherein the process of allocating said at least one virtual resource to a physical and/or software resource from a plurality of physical and/or software resources is part of management operations,
wherein management operations preferably include the first instantiation of a virtualized deployment, or the full or partial scaling out, migration or healing of virtualized resources of an existing virtualized deployment.

11. The method according to any of the preceding claims wherein the at least one virtual resource is a virtual machine VM to run on a hypervisor or a virtual application container to run on an operating system, or a virtual disk drive for storage.

12. The method according to any of the preceding claims wherein the allocation of virtual resources is provided for a virtualized deployment, wherein the virtualized deployment is a virtual network function VNF.

13. The method according to any of the preceding claims wherein the affinity information can take multiple values to cover different allocation cases, preferably including one or more of anti-affinity to specific tenants, affinity to specific tenants, affinity to virtual resources which are compute, storage or network intensive.

14. An apparatus for allocating by a virtualized resource management engine at least one virtual resource to a physical and/or software resource from a plurality of physical and/or software resources comprising:
a module for obtaining information used to identify a first tenant requesting said at least one virtual resource,
a module for obtaining affinity information, specifying whether or not said requested virtual resource may be collocated on the same physical and/or software resource with one or more virtual resources of another tenant different from said first tenant.

15. A computer program comprising computer program code, which when being executed on a computer enables said computer to carry out a method according to one of claims 1 to 13.

## Amended claims

### Amended claims in accordance with Rule 137(2) EPC.

1. A method of allocating by a virtualized resource management engine (511) at least one virtual resource to a physical and/or software resource from a plurality of physical and/or software resources (105) comprising the steps of:
obtaining information used to identify a first tenant requesting said at least one virtual resource,
obtaining affinity information as a parameter of a resource allocation request, specifying whether or not said requested virtual resource may be collocated on the same physical and/or software resource with one or more virtual resources of another tenant different from said first tenant;
allocating the at least one virtual resource based on the affinity information.

2. The method according to claim 1 including a step to obtain information related to the current allocation of virtual resources to the plurality of physical and software resources.

3. The method according to any of the preceding claims wherein said virtualized resource management engine is part of an entity (104) responsible for the virtualized infrastructure management of virtual, physical, and software resources in a data center or cloud infrastructure (512).

4. The method according to any of the preceding claims wherein a signaling entity of the information used to identify a first tenant and the affinity information is an entity (103) responsible for the management of virtual network functions.

5. The method according to any of the preceding claims, wherein signaling is forwarded through an entity (102) responsible for orchestration of resources and virtual network functions.

6. The method according to any of the preceding claims, including an intermediate step to discover the affinity information based on information received to identify the first tenant.

7. The method according to claim 6 wherein:
the signaling entity of the information used to identify the first tenant is an entity responsible for the management of virtual network functions,
discovery of the affinity information based on the information used to identify the first tenant is performed by an entity responsible for the orchestration of resources and virtual network functions, and
signaling of information used to identify the first tenant and the affinity information is performed by an entity responsible for orchestration of resources and virtual network functions.

8. The method according to any of the preceding claims, wherein the affinity information is part of a policy, and the affinity information is signaled as part of the setup process of said policy.

9. The method according to any of the preceding claims,
wherein the process of allocating said at least one virtual resource to a physical and/or software resource from a plurality of physical and/or software resources is part of management operations,
wherein management operations preferably include the first instantiation of a virtualized deployment, or the full or partial scaling out, migration or healing of virtualized resources of an existing virtualized deployment.

10. The method according to any of the preceding claims wherein the at least one virtual resource is a virtual machine VM to run on a hypervisor or a virtual application container to run on an operating system, or a virtual disk drive for storage.

11. The method according to any of the preceding claims wherein the allocation of virtual resources is provided for a virtualized deployment, wherein the virtualized deployment is a virtual network function VNF.

12. The method according to any of the preceding claims wherein the affinity information can take multiple values to cover different allocation cases, preferably including one or more of anti-affinity to specific tenants, affinity to specific tenants, affinity to virtual resources which are compute, storage or network intensive.

13. An apparatus for allocating by a virtualized resource management engine (511) at least one virtual resource to a physical and/or software resource from a plurality of physical and/or software resources (105) comprising:
a module for obtaining information used to identify a first tenant requesting said at least one virtual resource,
a module for obtaining affinity information as a parameter of a resource allocation request, specifying whether or not said requested virtual resource may be collocated on the same physical and/or software resource with one or more virtual resources of another tenant different from said first tenant;
a module designed to allocate the at least one virtual resource based on the affinity information.

14. A computer program comprising computer program code, which when being executed on a computer enables said computer to carry out a method according to one of claims 1 to 13.
